# EUROPEAN PATENT SPECIFICATION

(11) **EP 4 362 126 B1**
(45) Date of publication and mention of the grant of the patent: **04.11.2026**
(21) Application number: 23197773.7
(22) Date of filing: 15.09.2023
(51) Int. Cl.: H01M 4/04, H01M 4/131, H01M 4/133, H01M 4/134, H01M 4/1391, H01M 4/1393, H01M 4/66, H01M 4/62, H01M 10/0525

(54) **COMPOSITE POLE AND PREPARATION METHOD AND USE THEREOF, AND LITHIUM ION BATTERY**
VERBUNDPOL UND HERSTELLUNGSVERFAHREN UND VERWENDUNG DAVON SOWIE LITHIUM-IONEN-BATTERIE
PÔLE COMPOSITE, SON PROCÉDÉ DE PRÉPARATION ET SON UTILISATION, ET BATTERIE AU LITHIUM-ION

(30) Priority: 30.09.2022 CN 202211215032
(43) Date of publication of application: 01.05.2024
(73) Proprietor: Beijing WeLion New Energy Technology Co., Ltd, Beijing 102402 (CN)
(72) Inventor: LI, Jiuming, Beijing, 102402 (CN); XIAO, Haihong, Beijing, 102402 (CN); HUANG, Wenshi, Beijing, 102402 (CN); CHEN, Ting, Beijing, 102402 (CN); YANG, Qi, Beijing, 102402 (CN); YU, Huigen, Beijing, 102402 (CN)
(74) Representative: reuteler & cie SA

(56) References cited:
- JP-A- H1 140 200
- LIU YALI ET AL: "Molten salt electrolyte based on alkali bis(fluorosulfonyl)imides for lithium batteries", ELECTROCHIMICA ACTA, ELSEVIER, AMSTERDAM, NL, vol. 105, 21 May 2013 (2013-05-21), pages 524 - 529, XP028576564, ISSN: 0013-4686, DOI: 10.1016/J.ELECTACTA.2013.05.044
- SINGH RAJENDRA P ET AL: "Advances in chemistry of hydrogen bis(fluorosulfonyl)imide and its derivatives", JOURNAL OF FLUORINE CHEMISTRY, ELSEVIER, NL, vol. 226, 16 August 2019 (2019-08-16), XP085872993, ISSN: 0022-1139, [retrieved on 20190816], DOI: 10.1016/J.JFLUCHEM.2019.05.011
- GENG LISHAN ET AL: "Eutectic Electrolytes in Advanced Metal-Ion Batteries", ACS ENERGY LETTERS, vol. 7, no. 1, 15 December 2021 (2021-12-15), American Chemical Society, pages 247 - 260, XP093142515, ISSN: 2380-8195, DOI: 10.1021/acsenergylett.1c02088

## Description

### FIELD

The present disclosure relates to the technical field of lithium-ion batteries, in particular to a composite pole, a preparation method and a use thereof, and a lithium-ion battery containing the composite pole.

### BACKGROUND

As a novel chemical power source, the lithium-ion battery has emerged as a research focus due to its advantages such as small volume, light weight, high specific energy, and no memory effect, thus the lithium-ion battery is widely applied in mobile equipment, electric vehicles, and other energy fields. The electrode material is a key component of the battery, it directly determines the specific energy, cycle life, and other properties of the battery. However, the current research has discovered that the electrode material suffers from the serious attenuation in safety property, cycle performance, rate capability, and the like. And the electrode material may generate a large amount of heat due to temperature rise during the cycling, so that a certain hidden danger is generated against safety of the battery.

In order to solve the disadvantages of the electrode material, experts in industry and academia have taken various measures on the electrode material, for example. Flame retardant is added to the electrode material to suppress the oxygen release of the electrode material in the cycling, so as to improve safety of the battery; or some phase change materials (e.g., paraffin) are coated on the electrode, but because the phase change materials cannot conduct ions, the ion transmission capability is reduced. In addition, along with the continuous change of the electrochemical reaction, the modified materials still suffer from separation, fracture etc. during the reaction process, so that the structure of the electrode material still collapses after the long-term reaction, and the rate capability and safety performance of the battery cannot be improved. Therefore, the development of a material having high ionic conductivity and suppressing temperature rise is a current trend.

As a result, a novel composite pole is urgently needed. JPH1140200A relates to a lithium secondary battery using a non-aqueous electrolyte.
Liu Yali et al.: "Molten salt electrolyte based on alkali bis(fluorosulfonyl)imides for lithium batteries", Electrochimica Acta, 2013-05-21, ELSEVIER, AMSTERDAM, NL, vol. 105, pages 524-529 relates to molten salts used as electrolyte for a lithium battery. This article has the following content according to its abstract: "In this work, the phase diagram of high pure lithium bis(fluorosulfonyl)imide (LiFSI) and KFSI binary system has been measured. This system shows a high transfer number of lithium ion at 85 °C and its conductivity reaches to 10⁻³-10⁻² S cm⁻¹ from 40 °C to 150 °C. The electrochemical windows of this system have been measured using Pt, Al and Cu as working electrode, respectively. The reversibility of lithium deposition in eutectic mixture (LiFSI:KFSI = 0.4:0.6 by mole) were investigated on LiCoO₂, artificial graphite and LiFePO₄, respectively, by cyclic voltammetry using three-electrodes systems. It is found that the half cell with this eutectic system as electrolyte can charge and discharge reversibly for LiFePO₄ cathode but fails for MCMB and Li₄Ti₅O₁₂ anodes. This problem would be solved partially by forming a passivating layer in advance or coating a protection layer on anode."
Singh Rajendra P. et al.: "Advances in chemistry of hydrogen bis(fluorosulfonyl)imide and its derivatives", JOURNAL OF FLUORINE CHEMISTRY, 2019-08-16, ELSEVIER, NL, vol. 226 is a review article on the chemistry of hydrogen bis(fluorosulfonyl)imide (HFSI) and its derivatives.
Geng Lishan et al.: "Eutectic Electrolytes in Advanced Metal-Ion Batteries", 2022-01-14, ACS Energy Letters, vol. 7, nr. 1, pages 247-260 is a review article on eutectic electrolytes in advanced metal-ion batteries.

### SUMMARY

The present invention aims to solve the problems in the art with respect to the thermal runaway, poor ionic conductivity, and unstable structure of the electrode material caused by the temperature rise during the cycling, and provides a novel composite pole, a preparation method and a use thereof, and a lithium-ion battery containing the composite pole. The composite pole utilizes the phase change character of an electrolyte to improve the safety performance, ionic conductivity and structural stability. Moreover, a lithium-ion battery containing the composite pole has higher electrochemical performance.
The invention is set forth in claim 1. Dependent claims recite advantageous embodiments of the invention.

In order to achieve the above object, the first aspect of the present disclosure provides a composite pole for a lithium-ion battery comprising a current collector and coating disposed on surface of the current collector; wherein the coating comprises active electrode material and a eutectic electrolyte;

wherein the melting point and the phase transition temperature of the eutectic electrolyte are respectively within a range from 60°C to 200°C.

The eutectic electrolyte comprises a hydrogen bond acceptor and a hydrogen bond donor.

Preferably, the molar ratio of the hydrogen bond acceptor to the hydrogen bond donor is 1: (0.5-5).

Preferably, the active electrode material is contained in an amount from 72.5wt.% to 98.9wt.%, the eutectic electrolyte is contained in an amount from 0.2wt.% to 20wt.%, based on the total weight of the coating.

Preferably, the coating further comprises conductive agent and/or a binder.

The second aspect of the present disclosure provides a method for preparing the composite pole for a lithium-ion battery comprising the following steps:
(1) firstly mixing active electrode material, conductive agent, binder, and solvent to obtain an electrode slurry;
(2) secondly mixing a hydrogen bond acceptor with a hydrogen bond donor, heating the obtained mixture until transparent liquid is formed, then cooling to room temperature to obtain a solid-phase eutectic electrolyte;
(3) thirdly mixing the electrode slurry and the solid-phase eutectic electrolyte to obtain a mixed slurry, coating the mixed slurry on surface of a current collector, drying and rolling coated current collector to obtain a composite pole;
   wherein the melting point and the phase transition temperature of the eutectic electrolyte are respectively within a range from 60°C to 200°C; wherein the eutectic electrolyte comprises a hydrogen bond acceptor and a hydrogen bond donor.

The third aspect of the present disclosure provides use of the composite pole according to the first aspect or the composite pole prepared with the method according to the second aspect in lithium-ion battery.

The fourth aspect of the present disclosure provides a lithium-ion battery comprising the composite pole according to the first aspect, or the composite pole prepared with the method according to the second aspect.

Compared with the prior art, the present disclosure produces the following advantages:
(1) the present disclosure provides a composite pole, and defines coating comprises active electrode material and a eutectic electrolyte, combines the phase change property of the eutectic electrolyte. Such as the eutectic electrolyte absorbs heat by dissolving at high temperature, which solves the safety problem of the electrode material caused by temperature rise, and improves the safety performance, the structural stability and the ionic conductivity of the composite pole.
(2) the present disclosure provides a method for preparing the composite pole, wherein the eutectic electrolyte is mixed in the electrode slurry, after coating, drying and rolling, then cooling to room temperature, the eutectic electrolyte is filled or encapsulated in the electrode material in solid-phase. During the cycling, which is accompanied by the temperature rise and heating process, the eutectic electrolyte carries out phase change to absorb heat, so that the heat generation in the battery is reduced; thereby improving the safety of the battery; moreover, the method simplifies the technological process and facilitates the industrial production;
(3) Use of the composite pole provided by the present disclosure in lithium-ion battery can effectively improve the safety and the electrochemical performance of the battery, in particular the rate performance of the battery.

### BRIEF DESCRIPTION OF THE DRAWINGS

FIG. 1 is a hot box characterization diagram of a lithium-ion battery P1 assembled with the composite pole S1 prepared in Example 1;
FIG. 2 is a hot box characterization diagram of a lithium-ion battery P7 assembled with the composite pole S7 prepared in Example 7;
FIG. 3 is a hot box characterization diagram of a lithium-ion battery Q1 assembled with the composite pole S1 prepared in Example 1 and the composite pole S7 prepared in Example 7;
FIG. 4 is a hot box characterization diagram of a lithium-ion battery DP1 assembled with the composite pole DS1 prepared in Comparative Example 1;
FIG. 5 is a hot box characterization diagram of a lithium-ion battery DP3 assembled with the composite pole DS3 prepared in Comparative Example 3.

### DETAILED DESCRIPTION

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point value of the various ranges, and the individual point values may be combined with one another to produce one or more new numerical ranges, which should be deemed have been specifically disclosed herein.

Unless otherwise specified in the present disclosure, the expressions "first", "second" and "third" neither present any sequential order nor impose restriction on the steps of the respective materials, the expressions merely indicate that the materials are not the same material and the steps are not the same step. For example, the expressions "first", "second" and "third" in terms "first mixing", "second mixing" and "third mixing" merely signify that they are not the same mixing process.

The first aspect of the present disclosure provides a composite pole comprising a current collector and coating disposed on surface of the current collector; wherein the coating comprises active electrode material and a eutectic electrolyte;

wherein the melting point and the phase transition temperature of the eutectic electrolyte are respectively within a range from 60°C to 200°C

The inventors of the present disclosure have discovered that permeating the eutectic electrolyte with high melting point and high phase transition temperature into an electrode, and utilizing phase change caused by eutectic electrolyte according to the change of temperature (i.e., the eutectic electrolyte is in solid-phase at room temperature, and is dissolved and absorbs heat at high temperature), which solves the safety problem of the electrode material caused by temperature rise, and improves the poor conductivity of the electrode material. In particular, the safety performance, the ionic conductivity and the structural stability of the composite pole are further improved by regulating and controlling the components of the eutectic electrolyte and the ratio of the components (i.e., the eutectic electrolyte comprises a hydrogen bond acceptor and a hydrogen bond donor, and the molar ratio of the hydrogen bond acceptor to the hydrogen bond donor). In addition, a lithium ion battery containing the composite pole has higher electrochemical performance, especially higher rate capability.

Unless otherwise specified in the present disclosure, the coating disposed on surface of the current collector refers to that the coating may be loaded on the upper surface or the lower surface of the current collector, or may be loaded on both the upper surface and the lower surface of the current collector.

Unless otherwise specified in the present disclosure, the phase transition temperature refers to a temperature at which the eutectic electrolyte undergoes a phase transition, that is, the eutectic electrolyte is in a solid phase at a temperature lower than the phase transition temperature, and it is in a liquid phase at a temperature not lower than the phase transition temperature.

In the invention, the eutectic electrolyte comprises a hydrogen bond acceptor and a hydrogen bond donor. The hydrogen bond acceptor and the hydrogen bond donor in the eutectic electrolyte are connected by the acting force of the hydrogen bond during the phase change process, so as to form a continuous structure entirely, which avoids the separation of the eutectic electrolyte with the electrode material in the cycling, thereby improving the structural stability of the composite pole.

Unless otherwise specified in the present disclosure, the hydrogen bond acceptor and the hydrogen bond donor have different types.

In some embodiments of the present disclosure, preferably, the molar ratio of the hydrogen bond acceptor to the hydrogen bond donor is 1:(0.5-5), for instance, 1:0.5, 1:1, 1:1.5, 1:2, 1:2.5, 1:3, 1:3.5, 1:4.1, 1:5, and any value within the range formed by two numerical values thereof. The more preferred conditions are adopted such that the eutectic electrolyte has a higher melting point and higher phase transition temperature.

In the invention, the melting point and the phase transition temperature of the eutectic electrolyte are respectively within a range from 60°C to 200°C, for example, 60°C, 62°C, 70°C, 80°C, 90°C, 100°C, 110°C, 120°C, 138°C, 140°C, 146°C, 150°C, 180°C, 200°C, and any value within the range formed by two numerical values thereof, more preferably within a range from 80°C to 140°C.

Unless otherwise specified in the present disclosure, both the melting point parameter and the phase transition temperature parameter are measured by using a microscopic melting point apparatus.

In the present disclosure, the kind of hydrogen bond acceptor can be selected from a wide range. Preferably, the hydrogen bond acceptor is selected from a soluble lithium salt, preferably an organic lithium salt and/or an inorganic lithium salt, more preferably at least one selected from the group consisting of lithium bis (trifluoromethyl sulfonyl) imide (LiTFSI), lithium nitrate (LiNO₃), lithium perchlorate (LiC1O₄), lithium trifluoromethyl sulfonate (LiCFSO₃), lithium trifluorophosphate (LiPF₃), lithium tetrafluoroborate(LiBF), lithium hexafluoroarsenate (LiAsF₆), lithium bis (perfluoroethyl sulfonyl) imide (LiFSI), lithium (trifluoromethyl sulfonyl) (n-perfluorobutyl sulfonyl) imide (LiFNTFSI) and lithium bis (oxalate) borate (LiBOB).

Unless otherwise specified in the present disclosure, the term "solubility" means that the compound is readily soluble in water, or is soluble in water by the action of an auxiliary agent.

In the present disclosure, the kind of hydrogen bond donor can be selected from a wide range. Preferably, the hydrogen bond donor is selected from carboxylic acids and saccharides.

In some embodiments of the present disclosure, it is further preferred that the carboxylic acids are selected from monocarboxylic acids and/or polycarboxylic acids, preferably selected from monocarboxylic acids with C₅-C₁₆, and/or the polycarboxylic acids selected from inorganic acids (e.g., citric acid, tartaric acid, oxalic acid, malic acid, citrate, ascorbic acid) and aromatic organic acids (e.g., benzoic acid, phenylacetic acid, phenylpropionic acid), and more preferably at least one selected from the group consisting of citric acid, oxalic acid, and phenylacetic acid.

In some embodiments of the present disclosure, it is further preferred that the saccharides are at least one selected from the group consisting of monosaccharides, disaccharides, and polysaccharides, including but not limited to fructose, glucose, sucrose, and cellulose.

In some embodiments of the present disclosure, the active electrode material is contained in an amount from 72.5wt.% to 98.9 wt.%, preferably from 92wt.% to 98.1 wt.%, the eutectic electrolyte is contained in an amount from 0.2wt.% to 20 wt.%, preferably from 0.5wt.% to 5 wt.%, based on the total weight of the coating. The adoption of the preferable conditions is more conducive to improving the safety performance, structural stability, and conductivity of the composite pole.

In the present disclosure, there is a wide selection range for the kind of active electrode material. Preferably, the active electrode material is selected from active cathode material and active anode material.

In some embodiments of the present disclosure, further preferably, the active cathode material is at least one selected from the group consisting of LiFePO₄, LiCoO₂, LiMnO₂, LiNi₁₋ₐMnₐO₂, and LiNiₓCo_{y}M_{1-x-y}O₂, wherein 0<a<1; M is at least one selected from the group consisting of Mn, A1, Mg, Sn and Cr, 0<x<1, 0<y<1, and x+y<1.

In the present disclosure, the active cathode material includes but is not limited to LiFePO₄, LiCoO₂, LiMnO₂, LiNi_{0.5}Mn_{0.5}O₂, LiNi_{0.7}Mn_{0.3}O₂, LiNi_{0.2}Co_{0.3}Mn_{0.5}O₂, and LiNi_{0.4}Co_{0.4}Al_{0.2}O₂.

In some embodiments of the present disclosure, it is further preferable that the active anode material is at least one selected from the group consisting of graphite, monoatomic silicon, SiO_{b} (0<b≤2), and silicon carbide. Wherein the active anode material includes but is not limited to graphite, monoatomic silicon, silicon carbide, SiO₂, and SiO.

In some embodiments of the present disclosure, the current collector is preferably selected from copper foil or aluminum foil.

In some embodiments of the present disclosure, preferably, the coating further comprises conductive agent and/or binder; further preferably, the conductive agent is contained in an amount from 0.4wt.% to 3 wt.%, preferably from 0.6wt.% to 1.5 wt.%, and the binder is contained in an amount from 0.5wt.% to 4.5 wt.%, preferably from 0.8wt.% to 1.5 wt.%, based on the total weight of the coating.

Unless otherwise specified in the present disclosure, the coating is formed by coating a mixed slurry containing an electrode slurry and a melted eutectic electrolyte; wherein the electrode slurry comprises active electrode material, conductive agent, and binder.

In some embodiments of the present disclosure, preferably, the conductive agent is at least one selected from the group consisting of acetylene black, carbon fiber, carbon nanotube, ketjen black, graphite, and graphene.

In some embodiments of the present disclosure, preferably, the binder is at least one selected from the group consisting of polyvinylidene fluoride (PVDF), styrene butadiene rubber (SBR), carboxymethyl cellulose (CMC), polyacrylonitrile (PAN), and polyacrylate. In the present disclosure, the polyacrylate includes but is not limited to polymethyl acrylate, polyethyl acrylate, and polypropyl acrylate.

In some embodiments of the present disclosure, preferably, the coating has a thickness within the range from 100µm to 200µm, more preferably within the range from 130µm to 160µm. Unless otherwise specified in the present disclosure, the thickness parameter is measured by using a screw micrometer.

In some embodiments of the present disclosure, preferably, the ionic conductivity of the composite pole is larger than or equal to 3.2×10⁻⁷ S·cm⁻¹, such as 3.2×10⁻⁷ S·cm⁻¹, 3.8×10⁻⁷ S·cm⁻¹, 4.9×10⁻⁷ S·cm⁻¹, 6.2×10⁻⁷ S·cm⁻¹, 6.5×10⁻⁷ S·cm⁻¹, 7×10⁻⁷ S·cm⁻¹, 7.3×10⁻⁷ S·cm⁻¹, 3.6×10⁻⁶ S·cm⁻¹, 4.7×10⁻⁶ S·cm⁻¹,9×10⁻⁶ S·cm⁻¹,1×10⁻⁵ S·cm⁻¹,1.7×10⁻⁵ S·cm⁻¹, 4×10⁻⁵ S·cm⁻¹, 5×10⁻⁵ S·cm⁻¹, 6.7×10⁻⁵ S·cm⁻¹,8×10⁻⁵ S·cm⁻¹, 8.4×10⁻⁵ S·cm⁻¹, 1.1×10⁻⁴ S·cm⁻¹, and any value within the range formed by two numerical values thereof. The ionic conductivity parameter is measured by adopting an alternating current (AC) impedance method, and the specific testing process comprises the following steps: the ionic conductivity (σ) is measured by Electrochemical Impedance Spectroscopy (EIS) with a composite pole sandwiched between two stainless steel disk electrodes (SS), the frequency within the range of 1Hz-7MHz, and an AC amplitude of 10mV, the ionic conductivity is calculated according to the formula (1): $σ = \frac{L}{{R}_{b} S}$ (1); wherein *R_{b}* denotes the volume resistance of the composite pole (*R_{b}* is determined by impedance spectroscopy, *L* and *S* denote the thickness and area of the composite pole.

The second aspect of the present disclosure provides a method for preparing the composite pole comprising the following steps:
(1) firstly mixing active electrode material, conductive agent, binder, and solvent to obtain an electrode slurry;
(2) secondly mixing a hydrogen bond acceptor and a hydrogen bond donor, heating the obtained mixture until transparent liquid is formed, then cooling to room temperature to obtain a solid-phase eutectic electrolyte;
(3) thirdly mixing the electrode slurry with the solid-phase eutectic electrolyte to obtain a mixed slurry, coating the mixed slurry on surface of a current collector, drying and rolling coated current collector to obtain a composite pole;
   wherein the melting point and the phase transition temperature of the eutectic electrolyte are respectively within a range from 60°C to 200°C; wherein the eutectic electrolyte comprises a hydrogen bond acceptor and a hydrogen bond donor

In some embodiments of the present disclosure, preferably, in step (1), the weight ratio of the eutectic electrolyte to the active electrolyte material in the electrode slurry is (0.2-20): (72.5-98.9), more preferably (0.5-5): (92-98.1). The preferable conditions is more preferable to improving the safety and the conductivity of the composite pole.

In the present disclosure, the first mixing serves to uniformly blend the active electrode material, the conductive agent, the binder, and the solvent. Preferably, the conditions of the first mixing in step (1) comprise a temperature within a range from 15°C to 35°C, preferably within a range from 20°C to 30°C; and a time within a range from 0.1h to 10h, preferably within a range from 0.5h to 5h.

In some embodiments of the present disclosure, preferably, the weight ratio of active electrode material, conductive agent, and binder in the electrode slurry is (72.5-98.9): (0.4-3): (0.5-4.5), more preferably (92-98.1): (0.6-1.5): (0.8-1.5). Unless otherwise specified in the present disclosure, the weight ratio of the active electrode material, the conductive agent, and the binder is generally the default ratio of the material input of the active electrode material, the conductive agent, and the binder.

Unless otherwise specified in the present disclosure, the types of the active electrode material, the conductive agent, and the binder are defined as those mentioned above, the content will not be repeatedly described herein.

In the present disclosure, the solvent in step (1) serves to sufficiently dissolve the active electrode material, the conductive agent, and the binder to obtain the electrode slurry. Preferably, the solvent is selected from polar solvents, more preferably at least one selected from the group consisting of water, ethanol, propylene glycol, glycerol and N-methyl pyrrolidone, further preferably water and/or N-methyl pyrrolidone (NMP).

In some embodiments of the present disclosure, preferably, the molar ratio of the hydrogen bond acceptor to the hydrogen bond donor is 1: (0.5-5), for example, 1:0.5, 1:1, 1:1.5, 1:2, 1:2.5, 1:3, 1:3.5, 1:4.1, 1:5, and any value within the range formed by two numerical values thereof.

In the present disclosure, the hydrogen bond acceptor and the hydrogen bond donor are defined according to the above definitions, the content will not be repeatedly described herein.

In the present disclosure, the hydrogen bond acceptor and the hydrogen bond donor can be subjected to the direct dry-blending or melt-blending; the composite pole prepared with the melt-blending process has a higher ionic conductivity than the composite pole prepared with the direct dry-blending process.

In the present disclosure, the second mixing in step (2) serves to uniformly blend the hydrogen bond acceptor and the hydrogen bond donor to obtain a uniformly mixed eutectic electrolyte. Preferably, the conditions of the second mixing comprise a temperature within a range from 15°C to 35°C, preferably within a range from 20°C to 30°C; and a time within a range from 0.1h to 10h, preferably within a range from 0.5h to 5h.

In the present disclosure, the heating in step (2) aims to heat the hydrogen bond donor and the hydrogen bond acceptor, so that the compounds melt in a liquid state and form a eutectic electrolyte with the hydrogen bonding force. Preferably, the heating temperature in step (2) is higher than or equal to the phase transition temperature of the eutectic electrolyte.

In some embodiments of the present disclosure, it is further preferred that the heating temperature is higher than or equal to 60°C, more preferably within a range from 60°C to 200°C, further preferably within a range from 80°C to 140°C.

In the present disclosure, the third mixing in step (3) aims to uniformly blend the electrode slurry and the transparent liquid to obtain a mixed slurry. Preferably, the conditions of the third mixing comprise a temperature within a range from 15°C to 35°C, preferably within a range from 20°C to 30°C; and a time within a range from 0.1h to 10h, preferably within a range from 0.5h to 5h.

In the present disclosure, the drying and rolling process serve to remove the solvent in the mixed slurry, thereby forming coating comprising active electrode material, conductive agent, binder, and a eutectic electrolyte on surface of the current collector.

The third aspect of the present disclosure provides use of the composite pole according to the first aspect or the composite pole prepared with the method according to the second aspect in lithium-ion battery.

The fourth aspect of the present disclosure provides a lithium-ion battery comprising the composite pole according to the first aspect, or the composite pole prepared with the method according to the second aspect.

According to a particularly preferred embodiment of the present disclosure, a composite pole comprises a current collector and coating disposed on surface of the current collector; the coating comprises active electrode material and a eutectic electrolyte; wherein the melting point and the phase transition temperature of the eutectic electrolyte are respectively within the range from 60°C to 200°C; the active electrode material is contained in an amount from 92wt.% to 98.1 wt.%, the eutectic electrolyte is contained in an amount from 0.5wt.% to 5 wt.%, based on the total weight of the coating;
wherein the eutectic electrolyte comprises a hydrogen bond acceptor and a hydrogen bond donor in a molar ratio of 1: (0.5-5).

The present disclosure will be described in detail below with reference to examples.

Both the melting point parameter and the phase transition temperature parameter were measured by using a microscopic melting point apparatus.

The thickness parameter was measured by a screw micrometer.

The ionic conductivity parameter was measured by adopting an alternating current (AC) impedance method, and the specific testing process comprises the following steps: the ionic conductivity (σ) is measured by Electrochemical Impedance Spectroscopy (EIS) with a composite pole sandwiched between two stainless steel disk electrodes (SS), frequency within the range of 1Hz-7MHz, and an AC amplitude of 10mV, the ionic conductivity was calculated according to the formula (1): $σ = \frac{L}{{R}_{b} S}$ (1); wherein *R_{b}* denoted the volume resistance of the composite pole (*R_{b}* is determined by impedance spectroscopy), *L* and *S* denoted the thickness and area of the composite pole.

The physical property parameters of the composite pole (S1-S12 and DS1-DS4) prepared in Examples 1-12 and Comparative Examples 1-4 were shown in Table 1.

### Example 1

(1) Active cathode material (LiFePO₄), conductive agent (acetylene black), a binder (PVDF), and solvent NMP were subjected to first mixing (at a temperature of 25°C for 2h) to obtain an electrode slurry; wherein the weight ratio of the active cathode material, the conductive agent to the binder was 97:1:1;
(2) a hydrogen bond acceptor (LiTFSI) and a hydrogen bond donor (oxalic acid) were subjected to second mixing (at a temperature of 25°C for 2h), and the obtained mixture was heated (at a temperature of 120°C) until transparent liquid was formed, then cooled to room temperature, a solid-phase eutectic electrolyte was obtained;
   wherein the molar ratio of the hydrogen bond acceptor to the hydrogen bond donor was 1:1; both the melting point and the phase transition temperature of the eutectic electrolyte were 120°C;
   wherein the weight ratio of the eutectic electrolyte to the active electrode material in the electrode slurry was 1: 97;
(3) the electrode slurry and the solid-phase eutectic electrolyte were subjected to third mixing (at a temperature of 25°C for 2h), the obtained mixed slurry was coated on surface of a current collector, coated current collector was then dried and rolled to obtain a composite pole S1.

### Example 2

(1) Active cathode material (LiFePO₄), conductive agent (carbon fiber), a binder (SBR), and solvent (NMP) were subjected to first mixing (at a temperature of 20°C for 2h) to obtain an electrode slurry; wherein the weight ratio of the active cathode material, the conductive agent to the binder was 96.5:1.5:1.5;
(2) a hydrogen bond acceptor (LiNO₃) and a hydrogen bond donor (citric acid) were subjected to second mixing (at a temperature of 20°C for 3h), and the obtained mixture was heated (at a temperature of 140°C) until transparent liquid was formed, then cooled to room temperature, a solid-phase eutectic electrolyte was obtained;
   wherein the molar ratio of the hydrogen bond acceptor to the hydrogen bond donor was 1:0.5; both the melting point and the phase transition temperature of the eutectic electrolyte were 140°C;
   wherein the weight ratio of the eutectic electrolyte to the active electrode material in the electrode slurry was 0.5:96.5;
(3) the electrode slurry and the solid-phase eutectic electrolyte were subjected to third mixing (at a temperature of 20°C for 3h), the obtained mixed slurry was coated on surface of a current collector, coated current collector was then dried and rolled to obtain a composite pole S2.

### Example 3

(1) Active cathode material (LiFePO₄), conductive agent (graphite), a binder (PAN), and solvent (NMP) were subjected to first mixing (at a temperature of 30°C for 1h) to obtain an electrode slurry; wherein the weight ratio of the active cathode material, the conductive agent to the binder was 93.6:0.6:0.8;
(2) a hydrogen bond acceptor (LiBOB) and a hydrogen bond donor (sucrose) were subjected to second mixing (at a temperature of 30°C for 1h), and the obtained mixture was heated (at a temperature of 80°C) until transparent liquid was formed, then cooled to room temperature, a solid-phase eutectic electrolyte was obtained;
   wherein the molar ratio of the hydrogen bond acceptor to the hydrogen bond donor was 1:5; both the melting point and the phase transition temperature of the eutectic electrolyte were 80°C;
   wherein the weight ratio of the eutectic electrolyte to the active electrode material in the electrode slurry was 5:93.6;
(3) the electrode slurry and the solid-phase eutectic electrolyte were subjected to third mixing (at a temperature of 30°C for 1h), the obtained mixed slurry was coated on surface of a current collector, coated current collector was then dried and rolled to obtain a composite pole S3.

### Example 4

The composite pole was prepared with the same method as that in Example 1, except that the molar ratio of the hydrogen bond acceptor to the hydrogen bond donor in the eutectic electrolyte was replaced with 1:3.5, both the melting point and the phase transition temperature of the eutectic electrolyte were 146°C, wherein the heating temperature was equal to the phase transition temperature; a composite pole S4 was prepared.

### Example 5

The composite pole was prepared with the same method as that in Example 1, except that the kind of the hydrogen bond acceptor was replaced with LiFSI, both the melting point and the phase transition temperature of the eutectic electrolyte were 62°C, wherein the heating temperature was equal to the phase transition temperature; a composite pole S5 was prepared.

### Example 6

The composite pole was prepared with the same method as that in Example 1, except that the weight ratio of the eutectic electrolyte to the active electrode material in the electrode slurry was placed with 20:72.5, and a composite pole S6 was prepared.

### Example 7

(1) Active anode material (graphite), conductive agent (acetylene black), a binder (PVDF), and solvent H₂O were subjected to first mixing (at a temperature of 25°C for 2h) to obtain an electrode slurry; wherein the weight ratio of the active anode material, the conductive agent to the binder was 96:1:1;
(2) a hydrogen bond acceptor (LiTFSI) and a hydrogen bond donor (citric acid) were subjected to second mixing (at a temperature of 25°C for 2h), and the obtained mixture was heated (at a temperature of 100°C) until transparent liquid was formed, then cooled to room temperature, a solid-phase eutectic electrolyte was obtained;
   wherein the molar ratio of the hydrogen bond acceptor to the hydrogen bond donor was 1:2; both the melting point and the phase transition temperature of the eutectic electrolyte were 100°C;
   wherein the weight ratio of the eutectic electrolyte to the active electrode material in the electrode slurry was 2:96;
(3) the electrode slurry and the solid-phase eutectic electrolyte were subjected to third mixing (at a temperature of 25°C for 2h), the obtained mixed slurry was coated on surface of a current collector, coated current collector was then dried and rolled, a composite pole S7 was prepared.

### Example 8

(1) Active anode material (graphite), conductive agent (carbon fiber), a binder (SBR), and solvent H₂O were subjected to first mixing (at a temperature of 20°C for 3h) to obtain an electrode slurry; wherein the weight ratio of the active anode material, the conductive agent to the binder was 97:1:1;
(2) a hydrogen bond acceptor (LiNO₃) and a hydrogen bond donor (oxalic acid) were subjected to second mixing (at a temperature of 20°C for 3h), and the obtained mixture was heated (at a temperature of 140°C) until transparent liquid was formed, then cooled to room temperature, a solid-phase eutectic electrolyte was obtained;
   wherein the molar ratio of the hydrogen bond acceptor to the hydrogen bond donor was 1:0.5; both the melting point and the phase transition temperature of the eutectic electrolyte were 140°C;
   wherein the weight ratio of the eutectic electrolyte to the active anode material in the electrode slurry was 1:97;
(3) the electrode slurry and the solid-phase eutectic electrolyte were subjected to third mixing (at a temperature of 20°C for 2h), the obtained mixed slurry was coated on surface of a current collector, coated current collector was then dried and rolled, a composite pole S8 was prepared.

### Example 9

(1) Active anode material (graphite), conductive agent (graphite), a binder (PAN), and solvent H₂O were subjected to first mixing (at a temperature of 30°C for 1h) to obtain an electrode slurry; wherein the weight ratio of the active anode material, the conductive agent to the binder was 92:1.5:1.5;
(2) a hydrogen bond acceptor (LiBOB) and a hydrogen bond donor (sucrose) were subjected to second mixing (at a temperature of 30°C for 1h), and the obtained mixture was heated (at a temperature of 80°C) until transparent liquid was formed, then cooled to room temperature, a solid-phase eutectic electrolyte was obtained;
   wherein the molar ratio of the hydrogen bond acceptor to the hydrogen bond donor was 1:5; both the melting point and the phase transition temperature of the eutectic electrolyte were 80°C;
   wherein the weight ratio of the eutectic electrolyte to the active electrode material in the electrode slurry was 5:92;
(3) the electrode slurry and the solid-phase eutectic electrolyte were subjected to third mixing (at a temperature of 30°C for 1h), the obtained mixed slurry was coated on surface of a current collector, coated current collector was then dried and rolled, a composite pole S9 was prepared.

### Example 10

The composite pole was prepared with the same method as that in Example 7, except that the molar ratio of the hydrogen bond acceptor to the hydrogen bond donor in the eutectic electrolyte was replaced with 1:4.1, both the melting point and the phase transition temperature of the obtained eutectic electrolyte were 138°C, wherein the heating temperature was equal to the phase transition temperature; a composite pole S10 was prepared.

### Example 11

The composite pole was prepared with the same method as that in Example 7, except that the kind of hydrogen bond donor was replaced with glucose, both the melting point and the phase transition temperature of the obtained eutectic electrolyte were 70°C, wherein the heating temperature was equal to the phase transition temperature; a composite pole S11 was prepared.

### Example 12

The composite pole was prepared with the same method as that in Example 7, except that the weight ratio of the eutectic electrolyte to the active electrode material in the electrode sheet slurry was replaced with 0.2:98.9, and a composite pole S12 was prepared.

### Comparative Example 1

The composite pole was prepared with the same method as that in Example 1, except that the hydrogen bond acceptor (LiTFSI) and the hydrogen bond donor (oxalic acid) were not heated in step (2), a eutectic electrolyte was not formed, and compounds were directly mixed with the electrode pole under the same conditions, a composite pole DS1 was prepared.

### Comparative Example 2

The composite pole was prepared with the same method as that in Example 1, except that the molar ratio of hydrogen bond acceptor (LiTFSI) and hydrogen bond donor (oxalic acid) in step (2) was replaced with 1:0.1, both the melting point and the phase transition temperature of the obtained eutectic electrolyte were 30°C, wherein the heating temperature was equal to the phase transition temperature; a composite pole DS2 was prepared.

### Comparative Example 3

The composite pole was prepared with the same method as that in Example 7, except that the hydrogen bond acceptor (LiTFSI) and the hydrogen bond donor (citric acid) were not heated in step (2), a eutectic electrolyte was not formed, and compounds were directly mixed with the electrode pole under the same conditions, a composite pole DS3 was prepared.

### Comparative Example 4

The composite pole was prepared with the same method as that in Example 7, except that the molar ratio of hydrogen bond acceptor (LiTFSI) and hydrogen bond donor (citric acid) in step (2) was replaced with 1:10, both the melting point and the phase transition temperature of the obtained eutectic electrolyte were 45°C, wherein the heating temperature was equal to the phase transition temperature; a composite pole DS4 was prepared.

**Table 1**

| | Coating | | Composite pole |
|---|---|---|---|
| | content of the active electrode material, wt.% | content of the eutectic electrolyte, wt.% | ionic conductivity, S·cm⁻¹ |
| Example 1 | 97 | 1 | 8×10⁻⁵ |
| Example 2 | 96.5 | 0.5 | 6.7×10⁻⁵ |
| Example 3 | 93.6 | 5 | 5×10⁻⁵ |
| Example 4 | 97 | 1 | 4.7×10⁻⁶ |
| Example 5 | 97 | 1 | 3.6×10⁻⁶ |
| Example 6 | 72.5 | 20 | 4×10⁻⁵ |
| Example 7 | 96 | 2 | 7×10⁻⁷ |
| Example 8 | 97 | 1 | 6.5×10⁻⁷ |
| Example 9 | 92 | 5 | 6.2×10⁻⁷ |
| Example 10 | 96 | 2 | 4.9×10⁻⁷ |
| Example 11 | 96 | 2 | 3.8×10⁻⁷ |
| Example 12 | 98.9 | 0.2 | 3.2×10⁻⁷ |
| Comparative Example 1 | 97 | - | 0.6×10⁻⁷ |
| Comparative Example 2 | 97 | 1 | 0.8×10⁻⁷ |
| Comparative Example 3 | 96 | - | 1.1×10⁻⁸ |
| Comparative Example 4 | 96 | 2 | 2.1×10⁻⁸ |

As illustrated by the results in Table 1, the composite poles provided by the present disclosure have a higher ionic conductivity than those prepared in Comparative Examples 1-4. In particular, by regulating and controlling the content of active electrode material and eutectic electrolyte in the composite pole, the type and molar ratio of hydrogen bond acceptor and hydrogen bond donor in the eutectic electrolyte, and the weight ratio of the eutectic electrolyte to the active electrode material in the electrode slurry, it is more conducive to improving ionic conductivity of the composite pole.

### Test Examples

### Assembling the battery:

The first case: the pouch cells having a capacity of 5Ah were assembled by using the composite poles (S1-S6 and DS1-DS2) prepared in Examples 1-6 and Comparative Examples 1-2 as positive electrode poles respectively, and using graphite as the negative electrodes, lithium-ion batteries (P1-P6 and DP1-DP2) were obtained.

The second case: the pouch cells having a capacity of 5Ah were assembled by using the composite poles (S7-S12 and DS3-DS4) prepared in Examples 7-12 and Comparative Examples 3-4 as negative electrode poles respectively, and using LiFePO₄ as the positive electrodes, lithium-ion batteries (P7-P12 and DP3-DP4) were obtained.

The third case: the pouch cells having a capacity of 5Ah were assembled by using the composite poles (S 1-S6) prepared in Examples 1-6 as positive electrode poles, and using the composite poles (S7-S12) prepared in Examples 7-12 as negative electrode poles, lithium-ion batteries (Q1-Q6) were obtained.

### Conditions of safety testing:

Firstly, the lithium-ion batteries (P1-P12, DP1-DP4 and Q1-Q6) were respectively formed and then disassembled, the corresponding composite poles were subjected to the DSC heat release testing;
secondly, the lithium-ion batteries (P1-P12, DP1-DP4 and Q1-Q6) were respectively subjected to the hot box experimental testing, the specific testing process was as follows: the batteries were heated at the temperature rise rate of 5°C/min, and starting from 130°C, the temperature was preserved for 1h after each temperature rise of 10°C, until the batteries were in a state of thermal runaway;
thirdly, the lithium-ion batteries (P1-P12, DP1-DP4 and Q1-Q6) were subjected to the nail penetration experimental testing respectively, the specific testing process was as follows: a non-rust steel needle with a smooth surface and a diameter of 5mm was penetrated through the geometric center at a speed of 20-30mm/s in a vertical direction to the battery polar plate, and the steel needle was retained in the batteries and observed for 1h;
among them, the measured safety performance parameters of the lithium-ion batteries (P1-P12, DP1-DP4 and Q1-Q6) were shown in Table 2.

Test conditions for rate capability:
the lithium-ion batteries (P1-P12, DP1-DP4 and Q1-Q6) were subjected to the constant current charge-discharge testing under different multiplying power conditions of 0.1C, 0.33C, 0.5C, 1C, and 2C respectively and voltage within a range of 2.5-3.7V;
wherein the rate capability parameters of the lithium-ion batteries (P1-P12, DP1-DP4 and Q1-Q6) were illustrated in Table 3.

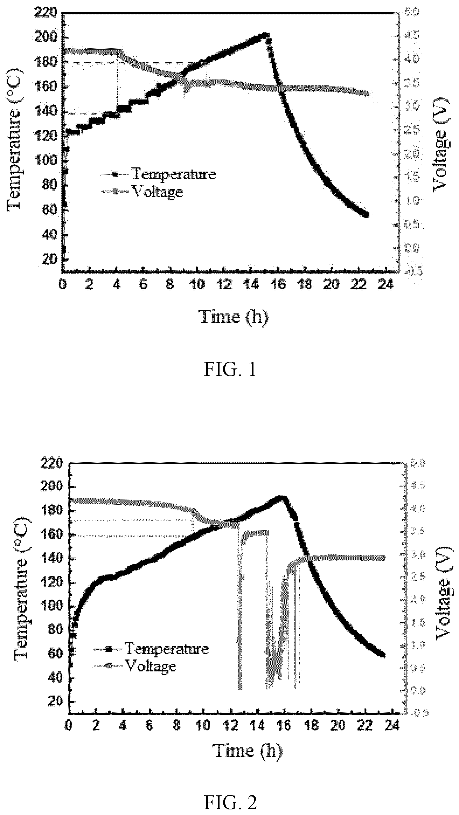

FIG. 1 was a hot box characterization diagram of a lithium-ion battery P1 assembled with the composite pole S1 prepared in Example 1. As shown by FIG. 1, the lithium-ion battery P1 did not explode when the temperature reached 200°C.

FIG. 2 was a hot box characterization diagram of a lithium-ion battery P7 assembled with the composite pole S7 prepared in Example 7. As illustrated by FIG. 2, the lithium-ion battery P7 did not explode when the temperature reached 200°C.

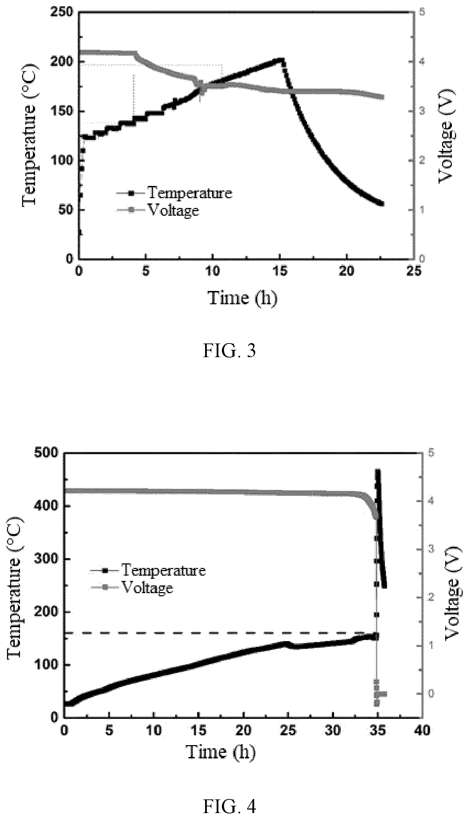

FIG. 3 illustrated a hot box characterization diagram of a lithium-ion battery Q1 assembled with the composite pole S1 prepared in Example 1 and the composite pole S7 prepared in Example 7. As can be seen from FIG. 3, the lithium-ion battery Q1 did not explode when the temperature reached 200°C.

FIG. 4 illustrated a hot box characterization diagram of a lithium-ion battery DP1 assembled with the composite pole DS1 prepared in Comparative Example 1, as shown by FIG. 4, the lithium-ion battery DP1 exploded after the temperature reached 165°C.

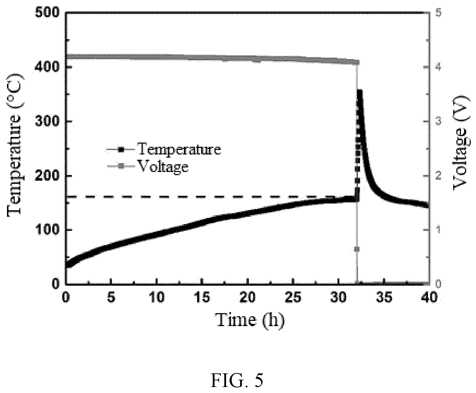

FIG. 5 showed a hot box characterization diagram of a lithium-ion battery DP3 assembled with the composite pole DS3 prepared in Comparative Example 3, as illustrated by FIG. 5, the lithium-ion battery DP3 exploded after the temperature reached 168°C.

**Table 2**

| | Lithium-ion batteries | Safety performance | | |
|---|---|---|---|---|
| | | DSC heat release, J/g | Hot box | Whether passed the needle penetration |
| Example 1 | P1 | 108.6 | unexploded | Yes |
| Example 2 | P2 | 106.7 | unexploded | Yes |
| Example 3 | P3 | 110.2 | unexploded | Yes |
| Example 4 | P4 | 120.3 | unexploded, smoky | Yes |
| Example 5 | P5 | 153.8 | unexploded, smoky | Yes |
| Example 6 | P6 | 149.6 | unexploded, smoky | Yes |
| Example 7 | P7 | 98.1 | unexploded | Yes |
| Example 8 | P8 | 88.7 | unexploded | Yes |
| Example 9 | P9 | 92.6 | unexploded | Yes |
| Example 10 | P10 | 139.2 | unexploded, smoky | Yes |
| Example 11 | P11 | 189.1 | unexploded, smoky | Yes |
| Example 12 | P12 | 163.0 | unexploded, smoky | Yes |
| Comparative Example 1 | DP1 | 582.6 | exploded | Not |
| Comparative Example 2 | DP2 | 456.9 | exploded | Not |
| Comparative Example 3 | DP3 | 559.1 | exploded | Not |
| Comparative Example 4 | DP4 | 412.7 | exploded | Not |
| Example 1+7 | Q1 | 85.2 | unexploded | Yes |
| Example 2+8 | Q2 | 80.9 | unexploded | Yes |
| Example 3+9 | Q3 | 78.6 | unexploded | Yes |
| Example 4+10 | Q4 | 80.6 | unexploded | Yes |
| Example 5+11 | Q5 | 91.2 | unexploded | Yes |
| Example 6+12 | Q6 | 86 | unexploded | Yes |

**Table 3**

| | Lithium-ion batteries | Capacity, Ah | | | | |
|---|---|---|---|---|---|---|
| | | 0.1C | 0.33C | 0.5C | 1C | 2C |
| Example 1 | P1 | 9.912 | 9.842 | 9.351 | 8.985 | 7.956 |
| Example 2 | P2 | 9.900 | 9.812 | 9.259 | 8.801 | 7.693 |
| Example 3 | P3 | 9.862 | 9.756 | 9.108 | 8.726 | 7.152 |
| Example 4 | P4 | 9.802 | 9.662 | 9.007 | 8.816 | 7.625 |
| Example 5 | P5 | 9.835 | 9.623 | 9.103 | 8.826 | 7.531 |
| Example 6 | P6 | 9.856 | 9.620 | 9.100 | 8.529 | 7.423 |
| Example 7 | P7 | 9.882 | 9.649 | 9.259 | 8.847 | 7.689 |
| Example 8 | P8 | 9.886 | 9.598 | 9.466 | 8.889 | 7.695 |
| Example 9 | P9 | 9.856 | 9.596 | 9.329 | 8.746 | 7.628 |
| Example 10 | P10 | 9.801 | 9.636 | 9.253 | 8.953 | 7.656 |
| Example 11 | P11 | 9.828 | 9.666 | 9.285 | 8.907 | 7.535 |
| Example 12 | P12 | 9.857 | 9.687 | 9.289 | 8.883 | 7.438 |
| Comparativ e Example 1 | DP1 | 9.309 | 9.008 | 8.759 | 7.680 | 5.862 |
| Comparativ e Example 2 | DP2 | 9.521 | 9.120 | 8.912 | 7.519 | 5.583 |
| Comparativ e Example 3 | DP3 | 9.589 | 9.251 | 8.740 | 7.728 | 5.671 |
| Comparativ e Example 4 | DP4 | 9.417 | 9.082 | 8.414 | 7.489 | 5.490 |
| Example 1+7 | Q1 | 9.942 | 9.853 | 9.452 | 9.101 | 8.256 |
| Example 2+8 | Q2 | 9.950 | 9.861 | 9.459 | 9.108 | 8.329 |
| Example 3+9 | Q3 | 9.942 | 9.855 | 9.352 | 9.007 | 8.336 |
| Example 4+10 | Q4 | 9.949 | 9.841 | 9.350 | 8.998 | 8.421 |
| Example 5+11 | Q5 | 9.925 | 9.816 | 9.288 | 8.853 | 8.129 |
| Example 6+12 | Q6 | 9.956 | 9.807 | 9.351 | 8.672 | 8.005 |

As shown by the results of Table 2 and Table 3, the lithium-ion batteries assembled with the composite poles prepared in Examples 1-12 have higher safety and rate capability performance than the lithium-ion batteries assembled with the composite poles prepared in Comparative Examples 1-4.

Compared with the lithium-ion batteries P1-P12, the lithium-ion batteries Q1-Q6 have higher safety and rate capability performance; in addition, compared with the lithium-ion batteries P4-P6 and P10-P12, the lithium-ion batteries P1-P3 and P7-P9 exhibit higher safety performance and rate capability.

## Claims

1. A composite pole for a lithium-ion battery, wherein the composite pole comprising a current collector and coating disposed on surface of the current collector; wherein the coating comprises active electrode material and a eutectic electrolyte;
wherein the melting point and the phase transition temperature of the eutectic electrolyte are respectively within a range from 60°C to 200°C;
wherein the eutectic electrolyte comprises a hydrogen bond acceptor and
**characterized in that** the eutectic electrolyte comprises
a hydrogen bond donor.

2. The composite pole of claim 1, wherein the molar ratio of the hydrogen bond acceptor to the hydrogen bond donor is 1:(0.5-5);
preferably, the melting point and the phase transition temperature of the eutectic electrolyte are respectively within a range from 80°C to 140°C.

3. The composite pole of claim 2, wherein the hydrogen bond acceptor is selected from a soluble lithium salt, preferably an organic lithium salt and/or an inorganic lithium salt, more preferably at least one selected from the group consisting of lithium bis (trifluoromethyl sulfonyl) imide, lithium nitrate, lithium perchlorate, lithium trifluoromethyl sulfonate, lithium trifluorophosphate, lithium tetrafluoroborate, lithium hexafluoroarsenate, lithium bis (perfluoroethyl sulfonyl) imide, lithium (trifluoromethyl sulfonyl) (n-perfluorobutyl sulfonyl) imide, and lithium bis (oxalate) borate;
preferably, the hydrogen bond donor is selected from carboxylic acids and saccharides;
further preferably, the carboxylic acids are selected from monocarboxylic acids and/or polycarboxylic acids;
further preferably, the saccharides are at least one selected from the group consisting of monosaccharides, disaccharides, and polysaccharides, preferably at least one selected from the group consisting of fructose, glucose, sucrose, and cellulose.

4. The composite pole of any one of claims 1-3, wherein the active electrode material is contained in an amount from 72.5wt.% to 98.9wt.%, preferably from 92wt.% to 98.1wt.%, the eutectic electrolyte is contained in an amount from 0.2wt.% to 20wt.%, preferably from 0.5wt.% to 5wt.%, based on the total weight of the coating;
preferably, the active electrode material is selected from active cathode material and active anode material;
further preferably, the active cathode material is at least one selected from the group consisting of LiFePO₄, LiCoO₂, LiMnO₂, LiNi₁₋ₐMnₐO₂ and LiNiₓCo_{y}M_{1-x-y}O₂, wherein 0<a<1; M is at least one selected from the group consisting of Mn, A1, Mg, Sn and Cr, 0<x<1, 0<y<1, and x+y<1;
further preferably, the active anode material is at least one selected from the group consisting of graphite, monoatomic silicon, SiO_{b} (0<b≤2), and silicon carbide;
preferably, the current collector is selected from copper foil or aluminum foil.

5. The composite pole of any one of claims 1-4, wherein the coating further comprises conductive agent and/or a binder;
preferably, the conductive agent is contained in an amount from 0.4wt.% to 3wt.%, preferably from 0.6wt.% to 1.5wt.%, and the binder is contained in an amount from 0.5wt.% to 4.5wt.%, preferably from 0.8wt.% to 1.5wt.%, based on the total weight of the coating;
preferably, the conductive agent is at least one selected from the group consisting of acetylene black, carbon fiber, carbon nanotube, ketjen black, graphite, and graphene;
preferably, the binder is at least one selected from the group consisting of polyvinylidene fluoride, styrene butadiene rubber, carboxymethyl cellulose, polyacrylonitrile, and polyacrylate;
preferably, the coating has a thickness within the range from 100µm to 200µm, more preferably within the range from 130µm to 160µm.

6. A method of preparing the composite pole for a lithium-ion battery according to any one of claims 1-5 comprising the following steps:
(1) Firstly mixing active electrode material, conductive agent, a binder, and solvent to obtain an electrode slurry;
(2) secondly mixing a hydrogen bond acceptor and a hydrogen bond donor, heating the obtained mixture until transparent liquid is formed, then cooling to room temperature to obtain a solid-phase eutectic electrolyte;
(3) thirdly mixing the electrode slurry and the solid-phase eutectic electrolyte to obtain a mixed slurry, coating the mixed slurry on surface of a current collector, drying and rolling coated current collector to obtain a composite pole;
wherein the melting point and the phase transition temperature of the eutectic electrolyte are respectively within a range from 60°C to 200°C; wherein the eutectic electrolyte comprises a hydrogen bond acceptor and a hydrogen bond donor.

7. The method of claim 6, wherein the weight ratio of the eutectic electrolyte to the active electrolyte material in the electrode slurry is preferably (0.2-20): (72.5-98.9), more preferably (0.5-5): (92-98.1); preferably, the weight ratio of the active electrode material, conductive agent, and binder in the electrode slurry is (72.5-98.9): (0.4-3): (0.5-4.5), more preferably (92-98.1): (0.6-1.5): (0.8-1.5);
preferably, the molar ratio of the hydrogen bond acceptor to the hydrogen bond donor is 1: (0.5-5);
preferably, the heating temperature is higher than or equal to the phase transition temperature of the eutectic electrolyte; further preferably, the heating temperature is higher than or equal to 60°C, more preferably within a range from 60°C to 200°C, and further preferably within a range from 80°C to 140°C;
preferably, the conditions of the first mixing, the second mixing, and the third mixing respectively comprises a temperature within a range from 15°C to 35°C, preferably within a range from 20°C to 30°C; and a time within a range from 0.1h to 10h, preferably within a range from 0.5h to 5h.

8. A use of the composite pole of any one of claims 1-5 in lithium-ion battery.

9. A lithium-ion battery comprising the composite pole of any one of claims 1-5.

## Patentansprüche

1. Verbundpol für eine Lithium-Ionen-Batterie, wobei der Verbundpol einen Stromkollektor und eine Beschichtung umfasst, die auf der Oberfläche des Stromkollektors aufgebracht ist; wobei die Beschichtung aktives Elektrodenmaterial und einen eutektischen Elektrolyten umfasst;
wobei der Schmelzpunkt und die Phasenübergangstemperatur des eutektischen Elektrolyten jeweils innerhalb eines Bereichs von 60 °C bis 200 °C liegen;
wobei der eutektische Elektrolyt einen Wasserstoffbindungsakzeptor umfasst und **dadurch gekennzeichnet, dass** der eutektische Elektrolyt einen Wasserstoffbindungsdonator umfasst.

2. Verbundpol nach Anspruch 1, wobei das Molverhältnis des Wasserstoffbindungsakzeptors zum Wasserstoffbindungsdonator 1:(0,5 bis 5) beträgt;
wobei der Schmelzpunkt und die Phasenübergangstemperatur des eutektischen Elektrolyten vorzugsweise jeweils innerhalb eines Bereichs von 80 °C bis 140 °C liegen.

3. Verbundpol nach Anspruch 2, wobei der Wasserstoffbindungsakzeptor ausgewählt ist aus einem löslichen Lithiumsalz, vorzugsweise einem organischen Lithiumsalz und/oder einem anorganischen Lithiumsalz, bevorzugter aus mindestens einem, das ausgewählt ist aus der Gruppe, die besteht aus Lithium-bis(trifluormethylsulfonyl)imid, Lithiumnitrat, Lithiumperchlorat, Lithiumtrifluormethylsulfonat, Lithiumtrifluorophosphat, Lithiumtetrafluorborat, Lithiumhexafluoroarsenat, Lithiumbis(perfluorethylsulfonyl)imid, Lithium-(trifluormethylsulfonyl)-(n-perfluorbutylsulfonyl)imid und Lithiumbis(oxalat)borat;
wobei der Wasserstoffbindungsdonator vorzugsweise ausgewählt ist aus Carbonsäuren und Sacchariden;
wobei die Carbonsäuren ferner vorzugsweise ausgewählt sind aus Monocarbonsäuren und/oder Polycarbonsäuren;
wobei die Saccharide ferner vorzugsweise mindestens eines sind, das ausgewählt ist aus der Gruppe, die besteht aus Monosacchariden, Disacchariden und Polysacchariden, vorzugsweise mindestens eines sind, das ausgewählt ist aus der Gruppe, die besteht aus Fructose, Glucose, Saccharose und Cellulose.

4. Verbundpol nach einem der Ansprüche 1 bis 3, wobei das aktive Elektrodenmaterial in einer Menge von 72,5 Gew.-% bis 98,9 Gew.-%, vorzugsweise von 92 Gew.-% bis 98,1 Gew.-%, enthalten ist, der eutektische Elektrolyt in einer Menge von 0,2 Gew.-% bis 20 Gew.-%, vorzugsweise von 0,5 bis 5 Gew.-%, bezogen auf das Gesamtgewicht der Beschichtung, enthalten ist;
wobei das aktive Elektrodenmaterial vorzugsweise ausgewählt ist aus aktivem Kathodenmaterial und aktiven Anodenmaterial;
wobei das aktive Kathodenmaterial ferner vorzugsweise mindestens eines ist, das ausgewählt ist aus der Gruppe, die besteht aus LiFePO₄, LiCoO₂, LiMnO₂, LiNi₁₋ₐMnaO₂ und LiNiₓCo_{y}M_{1-x-y}O₂, wobei 0<a<1; M mindestens eines ist, das ausgewählt ist aus der Gruppe, die besteht aus Mn, Al, Mg, Sn und Cr, 0<x<1, 0<y<1, und x+y<1;
wobei das aktive Anodenmaterial ferner vorzugsweise mindestens eines ist, das ausgewählt ist aus der Gruppe, die besteht aus Graphit, monoatomischem Silizium, SiO_{b} (0<b≤2) und Siliziumcarbid;
wobei der Stromkollektor vorzugsweise ausgewählt ist aus Kupferfolie oder Aluminiumfolie.

5. Verbundpol nach einem der Ansprüche 1 bis 4, wobei die Beschichtung ferner ein leitfähiges Mittel und/oder ein Bindemittel umfasst;
wobei das leitfähige Mittel vorzugsweise in einer Menge von 0,4 Gew.-% bis 3 Gew.-%, vorzugsweise von 0,6 Gew.-% bis 1,5 Gew.-%, enthalten ist und das Bindemittel in einer Menge von 0,5 Gew.-% bis 4,5 Gew.-%, vorzugsweise von 0,8 Gew.-% bis 1,5 Gew.-%, bezogen auf das Gesamtgewicht der Beschichtung, enthalten ist;
wobei das leitfähige Mittel vorzugsweise mindestens eines ist, das ausgewählt ist aus der Gruppe, die besteht aus Acetylenruß, Kohlenstofffaser, Kohlenstoff-Nanoröhre, Ketjenruß, Graphit und Graphen;
wobei das Bindemittel vorzugsweise mindestens eines ist, das ausgewählt ist aus der Gruppe, die besteht aus Polyvinylidenfluorid, Styrol-Butadien-Kautschuk, Carboxymethylcellulose, Polyacrylnitril und Polyacrylat;
wobei die Beschichtung vorzugsweise eine Dicke im Bereich von 100 µm bis 200 µm, bevorzugter im Bereich von 130 µm bis 160 µm, aufweist.

6. Verfahren zur Herstellung des Verbundpols für eine Lithium-Ionen-Batterie nach einem der Ansprüche 1 bis 5, das die folgenden Schritte umfasst:
(1) erstens Mischen des aktiven Elektrodenmaterials, des leitfähigen Mittels, eines Bindemittels und eines Lösungsmittels, um eine Elektrodenschlämme zu erhalten;
(2) zweitens Mischen eines Wasserstoffbindungsakzeptors und eines Wasserstoffbindungsdonators, Erwärmen des erhaltenen Gemischs, bis eine transparente Flüssigkeit gebildet wird, dann Abkühlen auf Raumtemperatur, um einen eutektischen Festphasenelektrolyten zu erhalten;
(3) drittens Mischen der Elektrodenschlämme und des eutektischen Festphasenelektrolyten, um eine gemischte Schlämme zu erhalten, Beschichten einer Oberfläche eines Stromkollektors mit der gemischten Schlämme, Trocknen und Walzen des beschichteten Stromkollektors, um einen Verbundpol zu erhalten;
wobei der Schmelzpunkt und die Phasenübergangstemperatur des eutektischen Elektrolyten jeweils innerhalb eines Bereichs von 60 °C bis 200 °C liegen;
wobei der eutektische Elektrolyt einen Wasserstoffbindungsakzeptor und einen Wasserstoffbindungsdonator umfasst.

7. Verfahren nach Anspruch 6, wobei das Gewichtsverhältnis des eutektischen Elektrolyten zu dem aktiven Elektrolytmaterial in der Elektrodenschlämme vorzugsweise (0,2 bis 20):(72,5 bis 98,9), vorzugsweise (0,5 bis 5):(92 bis 98,1), beträgt;
wobei das Gewichtsverhältnis des aktiven Elektrodenmaterials, des leitfähigen Mittels und des Bindemittels in der Elektrodenschlämme vorzugsweise (72,5 bis 98,9):(0,4 bis 3):(0,5 bis 4,5), bevorzugter (92 bis 98,1):(0,6 bis 1,5):(0,8 bis 1,5), beträgt;
wobei vorzugsweise das Molverhältnis des Wasserstoffbindungsakzeptors zum Wasserstoffbindungsdonator 1:(0,5 bis 5) beträgt;
wobei vorzugsweise die Erwärmungstemperatur höher oder gleich der Phasenübergangstemperatur des eutektischen Elektrolyten ist; wobei ferner vorzugsweise die Erwärmungstemperatur höher als oder gleich 60 °C ist und vorzugweise innerhalb eines Bereichs von 60 °C bis 200 °C, und ferner vorzugsweise innerhalb eines Bereichs von 80 °C bis 140 °C liegt;
wobei vorzugsweise die Bedingungen des ersten Mischens, des zweiten Mischens und des dritten Mischens jeweils eine Temperatur innerhalb eines Bereichs von 15 °C bis 35 °C, vorzugsweise innerhalb eines Bereichs von 20 °C bis 30 °C; und eine Zeit innerhalb eines Bereichs von 0,1 h bis 10 h, vorzugsweise innerhalb eines Bereichs von 0,5 h bis 5 h, umfassen.

8. Verwendung des Verbundpols nach einem der Ansprüche 1 bis 5 in einer Lithium-Ionen-Batterie.

9. Lithium-Ionen-Batterie, die den Verbundpol nach einem der Ansprüche 1 bis 5 umfasst.

## Revendications

1. Pôle composite pour une batterie lithium-ion, où le pôle composite comprend un collecteur de courant et un revêtement disposé sur la surface du collecteur de courant ; où le revêtement comprend un matériau actif d'électrode et un électrolyte eutectique ;
où le point de fusion et la température de transition de phase de l'électrolyte eutectique sont respectivement à l'intérieur d'une plage allant de 60°C à 200°C ;
où l'électrolyte eutectique comprend un accepteur de liaison hydrogène et **caractérisé en ce que** l'électrolyte eutectique comprend un donneur de liaison hydrogène.

2. Pôle composite selon la revendication 1, où le rapport molaire de l'accepteur de liaison hydrogène sur le donneur de liaison hydrogène est de 1 : (0,5 à 5) ;
de préférence, le point de fusion et la température de transition de phase de l'électrolyte eutectique sont respectivement à l'intérieur d'une plage allant de 80°C à 140°C.

3. Pôle composite selon la revendication 2, où l'accepteur de liaison hydrogène est choisi parmi un sel de lithium soluble, de préférence un sel de lithium organique et/ou un sel de lithium inorganique, de manière mieux préférée est au moins l'un choisi dans le groupe consistant en bis(trifluorométhylsulfonyl)imide de lithium, nitrate de lithium, perchlorate de lithium, trifluorométhylsulfonate de lithium, trifluorophosphate de lithium, tétrafluoroborate de lithium, hexafluoroarséniate de lithium, bis(perfluoroéthylsulfonyl)imide de lithium, (trifluorométhylsulfonyl)(n-perfluorobutylsulfonyl)imide de lithium, et bis(oxalate)borate de lithium ;
de préférence, le donneur de liaison hydrogène est choisi parmi les acides carboxyliques et les saccharides ;
en outre, de préférence, les acides carboxyliques sont choisis parmi les acides monocarboxyliques et/ou les acides polycarboxyliques ;
en outre, de préférence, les saccharides sont au moins l'un choisi dans le groupe consistant en monosaccharides, disaccharides, et polysaccharides, de préférence au moins l'un choisi dans le groupe consistant en fructose, glucose, saccharode, et cellulose.

4. Pôle composite selon l'une quelconque des revendications 1 à 3, où le matériau actif d'électrode est présent en une quantité de 72,5 % en poids à 98,9 % en poids, de préférence de 92 % en poids à 98,1 % en poids, l'électrolyte eutectique est présent en une quantité de 0,2 % en poids à 20 % en poids, de préférence de 0,5 % en poids à 5 % en poids, sur la base du poids total du revêtement ;
de préférence, le matériau actif d'électrode est choisi parmi le matériau actif de cathode et le matériau actif d'anode ;
en outre, de préférence, le matériau actif de cathode est au moins un élément choisi dans le groupe consistant en LiFePO₄, LiCoO₂, LiMnO₂, LiNi₁₋ₐMnₐO₂ et LiNiₓCo_{y}M_{1-x-y}O₂, où 0 < a < 1 ; M est au moins un élément choisi dans le groupe consistant en Mn, Al, Mg, Sn, et Cr, 0 < x < 1, 0 < y < 1, et x + y < 1 ;
en outre, de préférence, le matériau actif d'anode est au moins un élément choisi dans le groupe consistant en graphite, silicium monoatomique, SiO_{b} (0 < b ≤ 2), et carbure de silicium ;
de préférence, le collecteur de courant est choisi parmi la feuille de cuivre ou la feuille d'aluminium.

5. Pôle composite selon l'une quelconque des revendications 1 à 4, où le revêtement comprend en outre un agent conducteur et/ou un liant ;
de préférence, l'agent conducteur est présent en une quantité de 0,4 % en poids à 3 % en poids, de préférence de 0,6 % en poids à 1,5 % en poids, et le liant est présent en une quantité de 0,5 % en poids à 4,5 % en poids, de préférence de 0,8 % en poids à 1,5 % en poids, sur la base du poids total du revêtement ;
de préférence, l'agent conducteur est au moins l'un choisi dans le groupe consistant en noir d'acétylène, fibre de carbone, nanotube de carbone, noir de ketjen, graphite et graphène ;
de préférence, le liant est au moins l'un choisi dans le groupe consistant en fluorure de polyvinylidène, caoutchouc de styrène butadiène, carboxyméthylcellulose, polyacrylonitrile et polyacrylate ;
de préférence, le revêtement a une épaisseur dans la plage de 100 µm à 200 µm, de manière mieux préférée dans la plage allant de 130 µm à 160 µm.

6. Procédé de préparation du pôle composite pour une batterie lithium-ion selon l'une quelconque des revendications 1 à 5 comprenant les étapes suivantes:
(1) premièrement mélanger un matériau actif d'électrode, un agent conducteur, un liant et un solvant pour obtenir une suspension d'électrode ;
(2) deuxièmement mélanger un accepteur de liaison hydrogène et un donneur de liaison hydrogène, chauffer le mélange obtenu jusqu'à ce qu'un liquide transparent soit formé, puis refroidir jusqu'à température ambiante pour obtenir un électrolyte eutectique en phase solide ;
(3) troisièmement mélanger la suspension d'électrode et l'électrolyte eutectique en phase solide pour obtenir une suspension mélangée, déposer la suspension mélangée sur la surface d'un collecteur de courant, sécher et laminer le collecteur de courant revêtu pour obtenir un pôle composite ;
où le point de fusion et la température de transition de phase de l'électrolyte eutectique sont respectivement à l'intérieur d'une plage allant de 60°C à 200°C ;
où l'électrolyte eutectique comprend un accepteur de liaison hydrogène et un donneur de liaison hydrogène.

7. Procédé selon la revendication 6, où le rapport en poids de l'électrolyte eutectique sur le matériau actif d'électrolyte dans la suspension d'électrode est de préférence de (0,2 - 20) : (72,5 - 98,9), de manière mieux préférée (0,5 - 5) : (92 - 98,1) ;
de préférence, le rapport en poids du matériau actif d'électrode, de l'agent conducteur et du liant dans la suspension d'électrode est de (72,5 - 98,9) : (0,4 - 3) (0,5 - 4,5), de manière mieux préférée (92 - 98,1) : (0,6 - 1,5) : (0,8 - 1,5) ;
de préférence, le rapport molaire de l'accepteur de liaison hydrogène sur le donneur de liaison hydrogène est de 1 : (0,5 - 5) ;
de préférence, la température de chauffage est supérieure ou égale à la température de transition de phase de l'électrolyte eutectique ; en outre, de préférence, la température de chauffage est supérieure ou égale à 60°C, de manière mieux préférée à l'intérieur d'une plage allant de 60°C à 200°C, et en outre de préférence à l'intérieur d'une plage allant de 80°C à 140°C ;
de préférence, les conditions du premier mélange, du deuxième mélange et du troisième mélange comprennent respectivement une température à l'intérieur d'une plage allant de 15°C à 35°C, de préférence à l'intérieur d'une plage allant de 20°C à 30°C ; et une durée à l'intérieur d'une plage allant de 0,1 h à 10 h, de préférence à l'intérieur d'une plage allant de 0,5 h à 5 h.

8. Utilisation du pôle composite selon l'une quelconque des revendications 1 à 5 dans une batterie lithium-ion.

9. Batterie lithium-ion comprenant le pôle composite selon l'une quelconque des revendications 1 à 5.
